# EUROPEAN PATENT APPLICATION

(11) **EP 1 336 335 A2**
(43) Date of publication of application: **20.08.2003**
(21) Application number: 03001709.9
(22) Date of filing: 27.01.2003
(51) Int. Cl.: A01J 5/12

(54) **Pneumatic pulsator for milking plants**

(30) Priority: 18.02.2002 IT MI20020317
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico Reggio Emilia (IT)
(74) Representative: Giambrocono, Alfonso, Dr. Ing.

(57) **Abstract**

The pneumatic pulsator (10; 10A) for milking plants comprises a pneumatic operating device for moving a slide valve (64) with reciprocating rectilinear movement to cyclically connect a vacuum source to the pulsation chambers of a milking unit. The slide valve (64) slides along a plate (62) of anti-wear synthetic material which is not affected by environmental climatic variations and presents ports communicating with the vacuum source and with the pulsation chambers. The plate (62) is sealedly pressed against a base (34) in which conduits are provided.
From the base (34) there project two mutually facing side walls (36.1, 36.2) forming part of the body (12), as does the base (34). The body (12) of the pulsator (10) has a rigid frame structure, of which the base (34) forms a first side, a second and a third side being formed by the side walls (36.1, 36.2), and a fourth side being formed by a rigid crosspiece (38). There is also provided a rigid U-piece (52) which straddles the slide valve (64) and is provided with two feet (56) which rest on the plate (62). The U-piece (52) is pressed against the plate (62) via a spherical hinge (54, 58) lying on an axis perpendicular to the plate (62) and centered with respect to the feet (56) of the U-piece (52). The body (12) and the U-piece (52) are constructed of a synthetic material which is not affected by environmental climatic variations.

## Description

The present invention relates to a pneumatic pulsator for milking plants. As is well known to the expert of the art, the pneumatic pulsator plays a fundamental role in a milking plant, as its performance directly influences the quality of the milking operation.

A pneumatic pulsator which has encountered considerable success is described in EP-B-0009282, of the same proprietor as the present application. In it, the reciprocating rectilinear movement of a slide valve enables a vacuum source to be cyclically connected to (according to the type of plant) one or two exit channels (or even four, if each of the two exit channels is split into two), a pulsation signal being transmitted by way of this channel or channels to relative pulsation chambers of a milking unit. The pulsation chambers are each formed by the space existing between an individual sheath casing of the milking unit and the relative elastic sheath enclosed within it (each sheath being intended to receive a teat of the animal to be milked). The said pulsation signal generates the required sheath movement necessary to effect milking.

During its reciprocating movement the said slide valve of this pulsator slides along a surface in which there are provided a port communicating with the vacuum source and, if the pulsator has a single exit channel, an exit port communicating with the exit channel connected, via two exit nozzles, to respective pulsation chambers. If instead there are two exit ports, the pulsator is provided with two (or four) exit channels. The slide valve is operated by a pneumatic operating device comprising a rod the axis of which is orientated in the direction of movement of the slide valve.

Each of the two ends of the rod is slidingly and sealedly supported by a relative wall forming part of the pulsator body, in which wall there is provided for this purpose a through hole encompassed by a metal anti-friction bush which (by virtue of very small machining tolerances) also provides a seal. The two walls are parallel and extend projectingly from a base which with them forms the body of the pulsator. On the outside of each wall there is provided a relative lateral cover fixable to it by screws in such a manner as to maintain sealedly pressed against the wall the edge of an elastic membrane (the so-called main membrane) which defines together with the wall a chamber which surrounds that hole in the wall into which the relative end of the rod carrying the slide valve is inserted. The chamber of each main membrane is connected alternately to the pulsator exit via a conduit provided in the relative wall and via an inverter device with which the pulsator is provided, to thus obtain reciprocating movement of the rod and hence of the slide valve.

The constancy of the slide valve sliding speed with time depends on the friction coefficient between the slide valve and the relative slide surface. For the pulsator to operate correctly, this speed must not vary with varying environmental climatic conditions.

In order to ensure that said friction coefficient remains as constant as possible with time, the surface on which the slide valve slides is of metal, in the form of metal plate fixable to the base of the pulsator body. It has however been found that the metal surface of the plate has a dew point which falls within the range within which the temperature encountered in a milking shed can vary. The consequent formation of condensate on the metal plate results in variation in said friction coefficient and hence variation in the slide valve sliding speed. To eliminate this drawback it has been attempted to cover the surface of the metal plate with a teflon-based coating, which ensures a substantially constant friction coefficient between the slide valve and the plate as environmental climatic conditions vary.

On applying this solution it was immediately evident that it suffered from the drawback that because of the sliding of the slide valve, the coating on the plate gradually wore away, to disappear in 6-12 months. Consequently, plant maintenance had to be programmed to include replacement of the coated plate before said drawback could appear. This resulted in high cost, also because its replacement required specialized personnel.

This situation has remained unchanged for some thirty years, without any attempt to increase the useful life of said coated plate being successful. The requirement to find a solution enabling the plate to be replaced at longer intervals was however much felt by the operators in that field.

The problem was finally solved in a very simple and practical manner by the pneumatic pulsator described in Italian utility model application MI99U 000323, of the same proprietor as the present application. This pulsator, which represents an improvement in the pulsator described in EP-B-0009289, is in fact provided with a plate consisting, throughout its entire thickness, of a synthetic material (for example a polyarylamide known commercially as PAXD6) of the type which ensures the required friction coefficient between the plate and slide valve without being affected by variations in the environmental climatic conditions present in the milking shed.

Such a solution may seem obvious and banal, but only to a person who has not lived through the last thirty years of evolution of pneumatic pulsators for milking plants. The fact is that the pulsator of MI99U 000323 enables the plate to be replaced much less frequently, with a significant economical advantage.

Unfortunately, although the pneumatic pulsator of MI99U 000323 - and in particular its embodiment illustrated in the figures of that document, and which is that currently produced by Interpuls S.p.A. - has well solved the problem of the slide plate life and is extremely compact and more reliable than those of the competition, it suffers however from drawbacks which are described hereinafter.

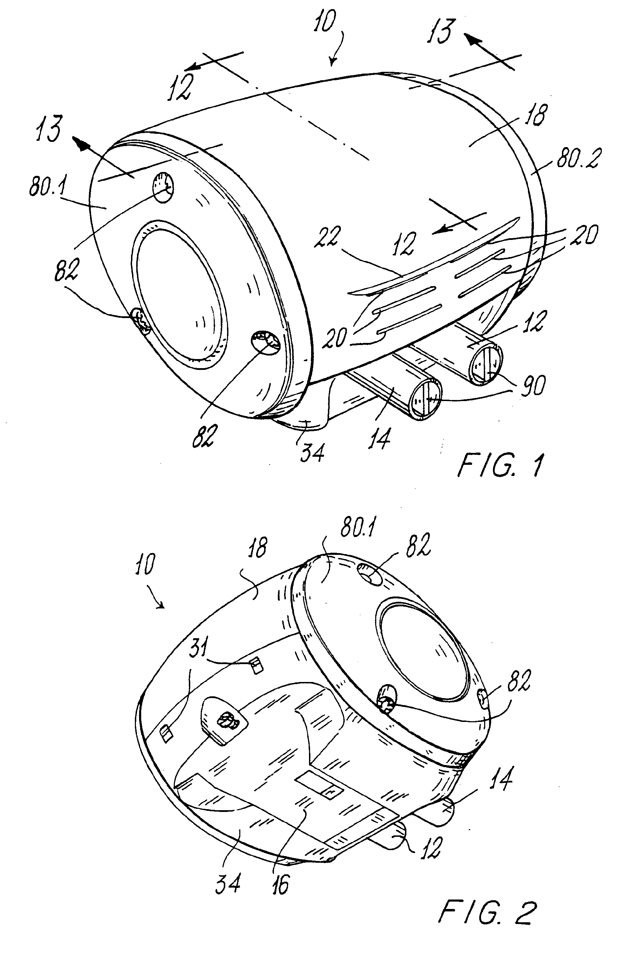

This pulsator also has a body comprising a base and two parallel side walls projecting from the base and in one piece therewith. The upper flat surface of the base presents grooves which enable the various connections to the vacuum source and to the pulsator exit channel or channels to be made. Each of the two side walls receives the relative main membrane, the edge of which is pressed against the wall by a respective lateral cover fixed by six screws. Again in this case the two main membranes drive the rod in the two directions by way of the inverter device, to operate the slide valve resting on the synthetic slide plate. Between this latter and the grooved upper surface of the base of the pulsator body there is interposed a gasket presenting apertures corresponding to those present in the base. The plate is fixed to the base by three screws, two in the vicinity of the one side of the plate and the third in the vicinity of the opposite side of the plate. A larger number of screws cannot be used to fix the plate because, as a result of said apertures in the upper surface of the base, there is materially not sufficient space (as can be seen by observing Figure 2 in MI99U 000323); neither is there sufficient space to embed threaded metal bushes (generally of brass) in the base, an expedient which would enable the screws to be rendered more secure and prevent their loosening with time. Consequently, although a load distribution element of synthetic material is inserted between said third screw and the plate to distribute the action exerted by this screw along a large part of the relative edge of the plate, the other two screws exert a fairly concentrated action on the plate. It can happen that, in particular as a result of excessive tightening of the screws (which cannot be excluded), the upper surface of the plate may not be flat, resulting in imperfect sealing between the slide valve and plate, with consequent malfunction of the pulsator.

Imperfect sealing between the slide valve and plate can also occur if the plate fixing screws should become slack (again, this also cannot be excluded).

It has also been found that the construction material of the pulsator body (nylon 6/6 filled with 30% of glass fibre) is sensitive to environmental climatic variations. In this respect, body dimensional variations can occur which, although small, have been found to influence the proper operation of the pulsator.

The conclusion is that if particularly unfavourable climatic conditions are present (and which can anyhow be the case in a milking shed) this pneumatic pulsator does not operate correctly, to the extent of being outside the limits set by the regulations.

An object of the present invention is to provide a pneumatic pulsator which does not present the aforestated drawbacks.

Another object is to provide a pneumatic pulsator which does not require maintenance, its life being so long that instead of changing the plate once worn, it is better to replace the entire pulsator, this being hence of the disposable type.

These objects are attained by the pneumatic pulsator according to the present invention, characterised in that:
- the pulsator body has a rigid frame structure, of which the base forms a first side, a second and a third side being formed by the side walls, and a fourth side being formed by a rigid crosspiece fixable between the free ends of the second and third side of the frame-like body;
- a rigid U-piece is provided which, with the pulsator assembled, straddles the slide valve and is provided with two feet which rest on the slide plate in proximity to a relative side of the slide valve, the fixing of the crosspiece in position resulting in the U-piece being pressed against the plate via a spherical hinge lying on an axis perpendicular to the plate and centered with respect to the feet of the U-piece so as to distribute the thrust uniformly onto these feet;
- the body and U-piece are constructed of a synthetic material which is not affected by environmental climatic variations.

The material of the pulsator body is also conveniently of self-lubricating type. In this manner each of its two side walls can be provided, directly during its injection-moulding, with the relative through hole intended to sealedly receive (by respecting the necessary tolerances) the respective end of the slide valve operating rod.

From tests carried out it has been found that a pulsator having the aforestated characteristics not only enables the slide plate for the slide valve to be replaced at extremely long intervals (evaluated at about ten years), but also, by virtue of the rigid structure of the pulsator body and of the materials used, operates in a manner which satisfies regulations whatever the climatic conditions of the milking shed.

The invention will be more apparent from the ensuing description of one embodiment thereof. In this description reference is made to the accompanying drawings, in which:
Figure 1 is a perspective view of a pneumatic pulsator according to the invention, the pulsator being of the type which draws air directly from the environment and is provided with two exit conduits;
Figure 2 is a second perspective view enabling those outer parts not visible in Figure 1 to be seen;
Figure 3 is a perspective view showing the pulsator without its upper closure cover;
Figure 4 is a perspective view of the cover alone, shown inverted;
Figure 5 is a perspective view showing the pulsator without the cover and also without the air suction grille and without the crosspiece forming the third side of its frame-like body;
Figure 6 is a perspective view of the crosspiece alone;
Figure 7 is a view of this latter from below;
Figure 8 is a perspective view of the pulsator from above, enabling its interior to be seen, as not only the closure cover and the crosspiece but also the U-piece and the inverter unit have been removed;
Figure 9 is a perspective view of the U-piece alone;
Figure 10 is a perspective view thereof from below;
Figure 11 is a perspective view of the inverter unit taken from below;
Figure 12 is a vertical section through the pulsator on the line 12-12 of Figure 1;
Figure 13 is a vertical section through the pulsator on the line 13-13 of Figure 1, but without the presence of the slide plate and the U-piece;
Figure 14 is a perspective view of a pulsator which differs from that of the preceding figures only in that instead of drawing air directly from the environment, it draws air through a pipe connected to a source of clean air.

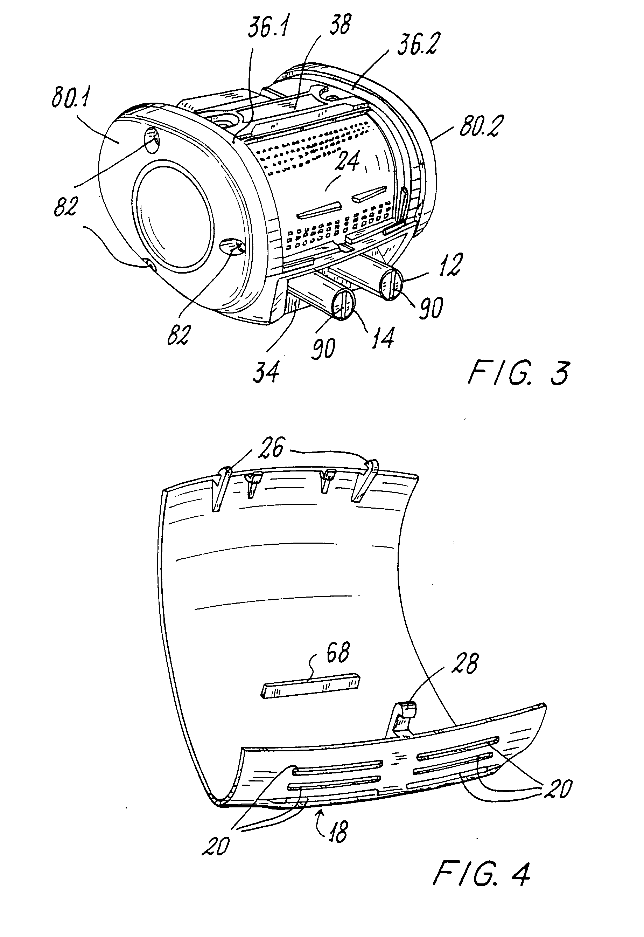

Observing Figures 1 and 2 it is immediately apparent even to a non-expert of the art that the pulsator 10 shown therein is extremely compact and is of pleasant and clean design. An expert of the art will in addition note its exclusive design and ergonomic shape, which facilitates its manipulation. It is also important to note that this pulsator has smaller overall dimensions than any pneumatic pulsator constructed so far. From the same figures it can be seen that the pulsator 10 has an outer casing 11 from which there project two exit channels, indicated by 12 and 14, and lowerly presents (Figure 2) a dovetail slot 16 for the application of a conventional slide support. The outer casing 11 comprises a removable convex cover 18 (see also Figure 4) to allow access to the interior. The cover 18 presents at its front two rows of slits 20, protected against possible dripping by a horizontal rib 22 disposed just above them to act as a "gutter" or "drip protector". Environmental air can directly enter the pulsator 10 through the slits 20, encountering a wide removable grille 24 having a shape which follows the shape of the closure cover 18, its purpose being to prevent insects or large particles possibly transported by the air from entering the interior of the pulsator 10.

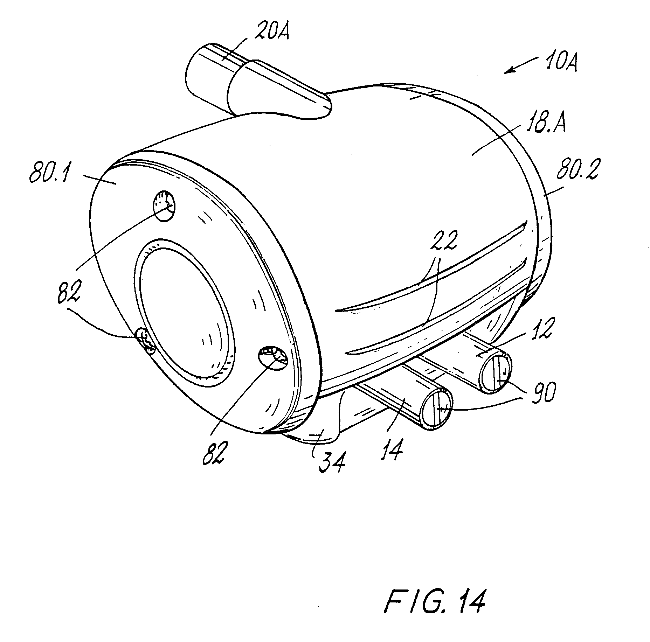

If the milking plant has a clean air source available (the air in a milking shed does not always possess this characteristic), the embodiment of Figure 14 can be used, in which a pulsator 10A is shown which differs from the pulsator 10 in the shape of the closure cover (indicated in this second case by 18A). This latter is without slits because there is no internal grille of the type indicated by 24 in Figure 3 (it not being required). The function of the grilles is in fact performed by a nozzle 20A with which the cover 18A is provided to make the connection to the clean air source by means of a flexible hose (not shown).

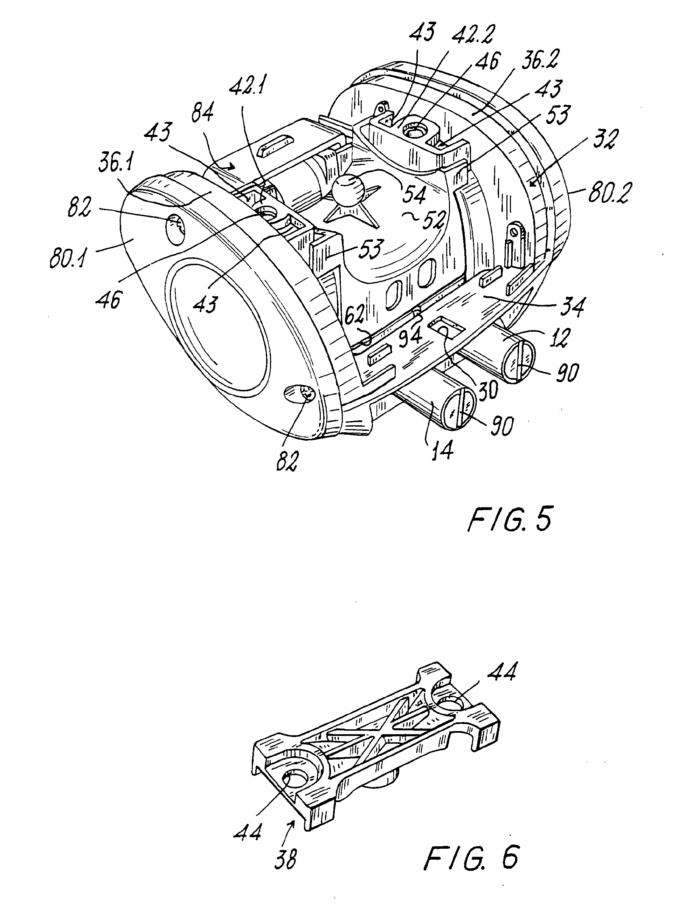

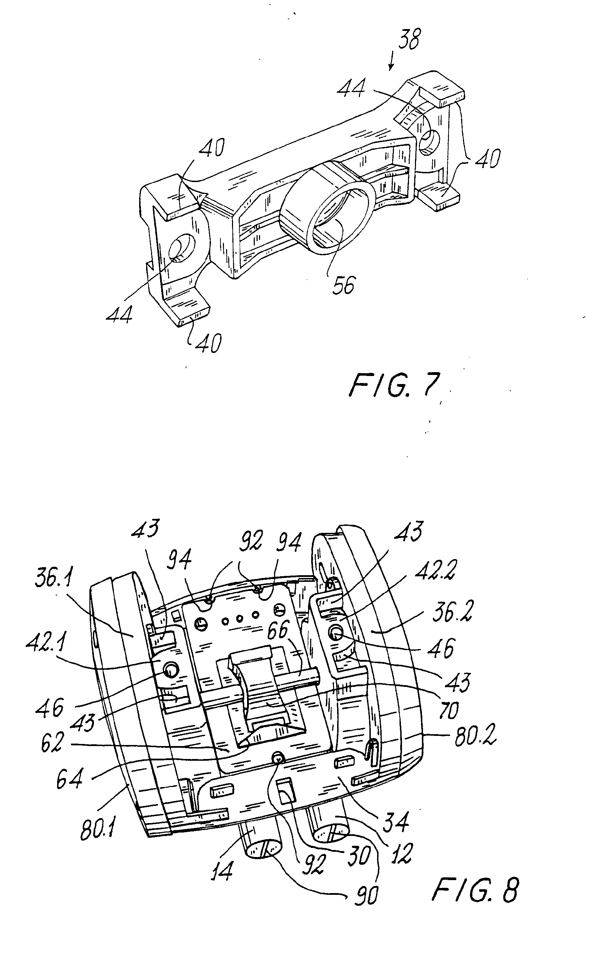

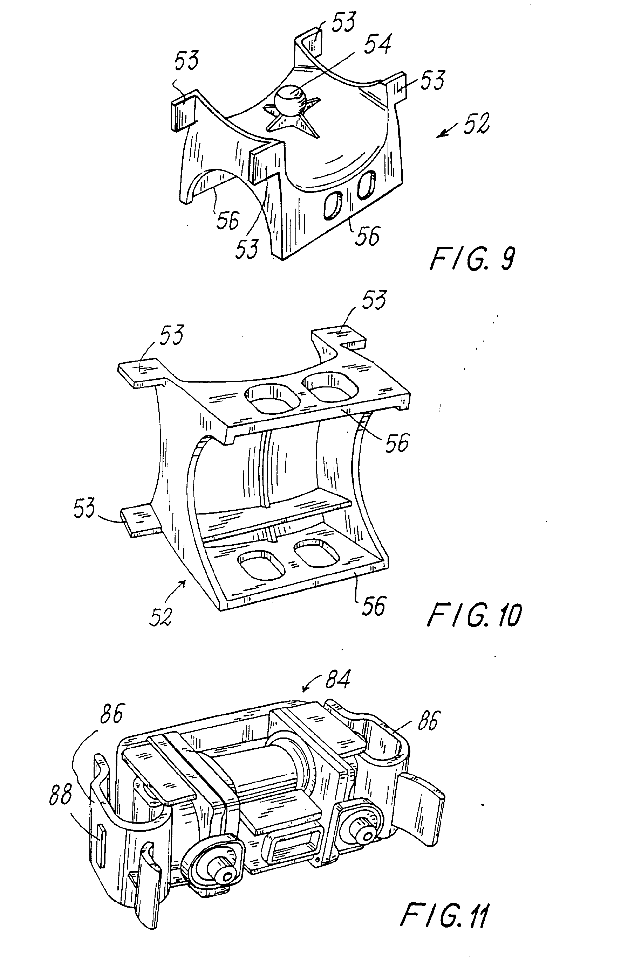

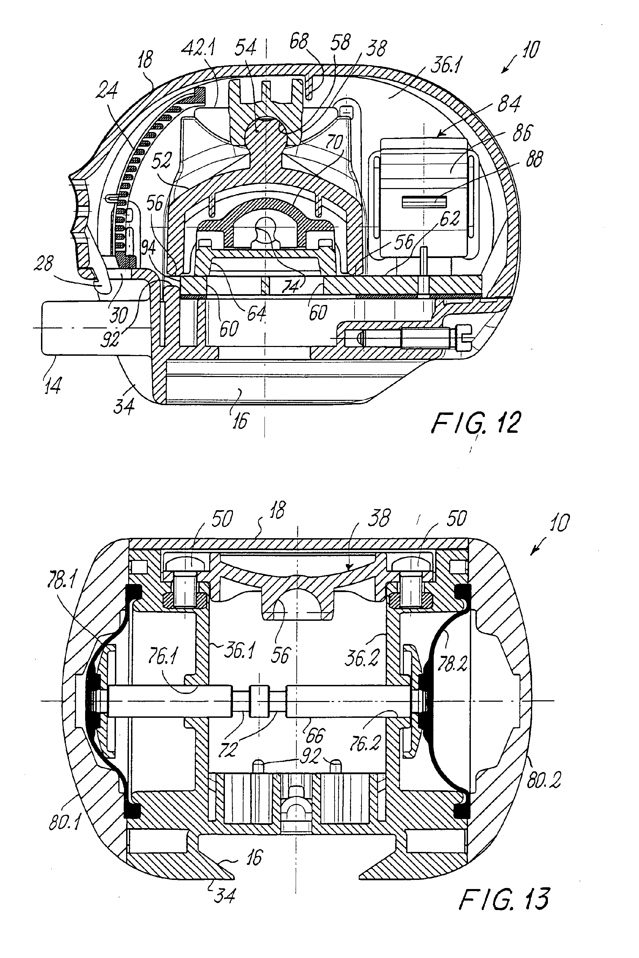

It can be seen that in both cases the cover (18, 18A) is provided not only with a transverse internal stiffening rib 68, but also with three hook-shaped elastic teeth (visible for the cover 18 in Figure 4 and indicated by 26 and 28) intended to snap-engage in relative apertures, of which in Figure 5 the aperture 30 can be seen for engagement by the tooth 28, and in Figure 2 the aperture 31 for engagement by the tooth 26. The cover 18, 18A can be very easily removed without the need for any tool. To achieve this it is merely pressed against the slits 20 and pushed upwards. Proceeding with the description of the pulsator 10, in Figure 3 it can be seen that this latter (shown without either the cover 18 or the grille 24) comprises a body 32 (also see Figures 12, 13 and Figures 5, 8, in these latter various internal parts having been removed). The body 32 comprises a base 34 and two side walls 36.1 and 36.2 projecting upwards from the base 34 and forming one piece with this latter. Between the side walls 36.1 and 36.2 there extends a crosspiece 38, best seen in Figures 6 and 7. As will be apparent on observing these figures, the crosspiece 38 is of considerable rigidity and strength, by virtue of the presence of numerous stiffening ribs (a rigid synthetic material must be used), and presents four feet 40 which facilitate its correct positioning within the pulsator 10. In this respect in proximity to the top of the side walls 36.1 and 36.2 there are provided supports, 42.1 and 42.2 respectively, suitably shaped for this purpose (as can be best seen from Figures 5 and 8). The crosspiece 38 also presents a through hole 40 in proximity to each of its ends, through which holes there can be inserted relative screws 50 (Figure 13) screwable into corresponding holes 46 provided in the supports 42.1 and 42.2. In correspondence with the holes 46 there are provided (Figure 13) respective threaded metal bushes 48 (preferably of brass) embedded into the material forming the side walls 36.1 and 36.2, and into which the respective screw 50 can be firmly screwed. As will be apparent, the presence of the bush 48 enables the crosspiece 38 to be rigidly fixed to the side walls 36.1 and 36.2, so preventing slackening of the fixing screws 50. It is important to note that when the crosspiece 38 has been fixed into position in the aforedescribed manner, the body 32 of the pulsator 10 essentially assumes the form of an extremely rigid frame consisting of the base 34, the two side walls 36.1 and 36.2 and the crosspiece 38. Again, the fact that this frame structure is formed of a material (for example an acetal resin) which must be rigid and insensitive to the climatic variations which can occur in a milking shed, means that undeformability of the body 32 is ensured in any situation in which the pulsator 10 is used.

As can be seen from Figures 6 and 12, below the crosspiece 38 there is disposed a U-piece 52 (shown alone in Figures 9 and 10) which straddles a conventional slide valve 64 (Figure 12). The U-piece 52 is provided with a spherical head 54 and two elongate feet 56. With the pulsator 10 assembled, the spherical head is received in the spherical cavity 58 provided in the bottom of the crosspiece 38, so obtaining a spherical joint. It should be noted that the axis of the spherical head 54 is perpendicular to the plane containing the feet 56 of the U-piece 52 and is centered with respect to them. From Figures 9 and 10 it will be apparent that, also by virtue of the ribbed configuration of the U-piece 52, it is of considerable strength and rigidity. The feet 56 of the U-piece 52 rest (Figure 12) on a plate 62 of a synthetic material which besides being undeformable as the climatic conditions in a milking shed vary, is also self-lubricating (consisting for example of a polyarylamide known commercially as PAXD6. As can be seen in Figure 12, the feet 56 of the U-piece 52 rest on the plate 62 in proximity to the sides of the slide valve 64 and extend (Figure 5) essentially along the entire length of the plate 62. Consequently, with the pulsator 10 assembled, and once the screws 50 have been tightened to a suitable tightening torque, the U-piece 52 is pressed by the crosspiece 38 against the plate 62 and, by virtue of the configuration of the U-piece 52 and the spherical joint 54, 58, the feet 56 of the U-piece 52 maintain the plate 62 properly at rest. The fact that the action of the feet 56 on this latter results (by virtue of the rigidity of the U-piece 52) in a pressure which is uniformly and widely distributed over the plate 62, prevents local deformation which could compromise the planarity of the upper surface of the plate 62. As already stated, this is of the maximum importance for the proper operation of the pulsator 10, because the slide valve 64 (also see Figure 8) slides in both senses (in the direction perpendicular to the sheet with reference to Figure 12) on the plate 62 between the feet 56 of the U-piece 52, as a result of being dragged by a rod 66 (Figures 8 and 13) to which the slide valve 64 is connected by a conventional connection element 70 (Figures 8 and 12) connectable in the usual manner to the rod 66 (not show in Figure 12 but visible in Figure 13, in which however the slide valve 64 is not shown) by virtue of two constrictions 72 provided in the rod and two relative recesses 74 (Figure 12).

The rod 66 can conveniently be of a suitable rigid plastic material (although a conventional stainless steel rod can be used), slidingly supported by the two side walls 36.1 and 36.2 so as to sealedly slide within relative through holes 76.1 and 76.2 provided in them. It should be noted that if a suitable self-lubricating synthetic material (such as the aforesaid acetal resin) is used to form the body 12 of the pulsator 10, the through holes 76.1 and 76.2 (Figure 13) can be obtained directly by injection moulding, with the required tolerances determined by the necessity to ensure the seal. It should also be noted that in the known pulsator currently available commercially, in which the body of the pulsator is of nylon 6/6 filled with 30% of glass fibre, to ensure the seal and the necessary degree of sliding of the rod, bushes of anti-friction synthetic material (the competition uses metal bushes) are inserted into the through holes supporting the rod, but after a period of rest they have to be bored to obtain, for receiving the rod, a hole which falls within the tolerances imposed by the seal. It is therefore immediately apparent that the new solution represents a considerable simplification, with consequent cost reduction.

The reciprocating movement of the rod 66 is obtained traditionally by two main elastic membranes 78.1 and 78.2 (Figure 13) the edge of which is pressed by a respective lateral cover 80.1 and 80.2 (forming part of the outer casing 11), constructed of a rigid synthetic material (for example polycarbonate), against the relative side wall 36.1 and 36.2 of the body 32, to seal it. In this specific case, as the lateral covers 80.1 and 80.2 are made rigid (by virtue both of the choice of material and of their configuration) they can be fixed to the relative wall 36.1 and 36.2 by merely three screws 82 (instead of the six present in said pulsator of MI99U 0003239. To ensure the seal, in proximity to the edge of the main membranes 78.1 and 78.2 the lateral covers 80.1 and 80.2 present on their inner face an annular rib (not shown for simplicity) which projects conveniently to a greater extent along those rib portions farthest from the holes for the screws 82. This enables any deformation caused by excessive tightening of the screws 82 to be compensated, to likewise ensure the seal.

The inverter device of the pulsator 10 has still to be described. This device, which is of conventional type, is however formed as a unit removable from the rest of the pulsator 10 and fitted by snap-engagement. In this specific case the inverter unit is indicated by 84 and visible in Figures 5 and 12 and, isolated, also in Figure 11. The inverter unit 84 will not be described as it is totally clear to an expert of the art, both in its structure and in its operation. It should be merely noted that it presents two elastic lateral arms 86 (Figure 11), each of which presents externally a relative rib 88 intended to snap into a respective aperture (not visible in the figures) provided in a corresponding position in each of the two side walls 36.1 and 36.2.

As already stated, the body 32 of the pulsator 10 is produced by injection moulding, so directly obtaining all the air passages therein. These latter have been dimensioned and modelled on the teachings of fluid dynamics, to eliminate or as much as possible reduce the generation of vortices resulting in fluctuations in the degree of vacuum (fluctuations which are very damaging for the quality of the milking operation). For this purpose each of the nozzles 12 and 14 presents internally one or more longitudinal baffles (in this specific case a single diametrical baffle 90) which divides its cross-section into two or more equal parts.

It is also important to note that the various component parts of the pulsator 10 are provided with means (pins or projections cooperating with holes or apertures or cavities) enabling the individual parts to be mounted only in the correct position. In particular, the plate 62 can be positioned precisely by three pins 92 projecting from the base 34 and insertable into respective notches 94 (see Figures 5, 8, 12, 13) provided in the edges of the plate 62. The same function is performed by: the three teeth 26, 28 on the upper cover 18, insertable into the relative apertures 30; the projections 40 on the crosspiece 38, insertable into the holes 43; and the fins 53 on the U-piece 52 which bear against shoulders (not numbered for simplicity) provided on the side walls 36.1 and 36.2. In addition to ensuring correct mounting of the parts with which the pulsator 10 or 10A is formed, said positioning means enable assembly to be simplified and accelerated (already made simple and rapid by the fact that many of its component parts are applied by snap-engagement). Consequently the pulsator 10 can be assembled by non-specialized personnel.

It should also be noted that the pulsator (10 or 10A) described and illustrated is of the type having two exit channels (12, 13). It is however apparent to an expert of the art that the pulsator of the present invention can present only one exit channel. To obtain this result the base of the pulsator body need merely be shaped in the obvious manner. The pulsator of the invention can also be easily formed with four exit channels, by simply splitting each of the two channels 12 and 14 of the pulsator 10 or 10A into two.

In conclusion, the operation of the pulsator 10 is not specifically described herein, as it is totally evident to an expert of the art having read the aforegoing.

## Claims

1. A pneumatic pulsator (10; 10A) for milking plants, comprising a pneumatic operating device for moving a slide valve (64) with reciprocating rectilinear movement to cyclically connect a vacuum source to the pulsation chambers of a milking unit, the slide valve (64) sliding along a plate (62) of anti-wear synthetic material which is not affected by environmental climatic variations and presents ports communicating with the vacuum source and with the pulsation chambers, the plate (62) being sealedly pressed against a base (34) in which conduits are provided to enable cyclic connection to the pulsation chambers as a result of the movement of the slide valve (64), there projecting from the base (34) two mutually facing side walls (36.1, 36.2) forming part, as does the base, of the body (12) of the pulsator (10),
**characterised in that**:
- the body (12) of the pulsator (10) has a rigid frame structure, of which the base (34) forms a first side, a second and a third side being formed by the side walls (36.1, 36.2), and a fourth side being formed by a rigid crosspiece (38) fixable between the free ends of the second (36.1) and third (36.2) side of the frame-like body (12);
- a rigid U-piece (52) is provided which, with the pulsator (10; 10A) assembled, straddles the slide valve (64) and is provided with two feet (56) which rest on the slide plate (62) in proximity to a relative side of the slide valve (64), the fixing of the crosspiece (38) in position resulting in the U-piece (52) being pressed against the plate (62) via a spherical hinge (54, 58) lying on an axis perpendicular to the plate (62) and centered with respect to the feet (56) of the U-piece (52) so as to distribute the thrust uniformly onto these latter (56);
- the body (12) and the U-piece (52) are constructed of a synthetic material which is not affected by environmental climatic variations.

2. A pneumatic pulsator (10; 10A) as claimed in claim 1, the outer casing (11) of which comprises a removable cover (18) providing access to the pulsator interior.

3. A pneumatic pulsator (10) as claimed in claim 2, wherein slits (20) are provided in the cover (18), a grille (24) being provided in the interior of the cover (18) in correspondence with the slits (20) to prevent entry into the pulsator (10) of insects or large particles transported by the air.

4. A pneumatic pulsator (10A) as claimed in claim 2, wherein the cover (18) is provided with a nozzle (20A) enabling connection to a source of clean air.

5. A pneumatic pulsator (10; 10A) as claimed in claim 2, wherein means (26, 28, 30) are provided for snap-fitting the cover (18; 18A) to the rest of the pulsator (10; 10A).

6. A pneumatic pulsator (10; 10A) as claimed in claim 1, wherein the crosspiece (38) is fixable to the rest of the body (12) of the pulsator (10; 10A) by screws screwable into relative threaded metal bushes (48) embedded into the material which forms the side walls (36.1, 36.2) of the body (12).

7. A pneumatic pulsator (10; 10A) as claimed in claim 1, wherein the pneumatic operating device comprises a rod (66) for operating the slide valve (64), each of the two ends of the rod (66) being inserted into a relative hole (76.1, 76.2) provided in the corresponding side wall (36.1, 36.2) of the body (12), the side walls (36.1, 36.2) being formed of a material which, in addition to not being affected by variations in the environmental climatic conditions, is also self-lubricating, the holes (76.1, 76.2) satisfying tolerances which ensure sealing between the ends of the rod (66) and the relative side walls (36.1, 36.2).

8. A pneumatic pulsator (10; 10A) as claimed in claim 7, wherein the operating device for the slide valve (64) comprises two main elastic membranes (78.1, 78.2) the edge of which is pressed against the relative side wall (36.1, 36.2) of the body (12) by a rigid lateral cover (80.1, 80.2) to ensure sealing, the lateral covers (80.1, 80.2) presenting on their inner face a projecting annular rib intended to make contact with the relative main membrane (78.1, 78.2) to ensure the seal.

9. A pneumatic pulsator (10; 10A) as claimed in claim 8, wherein the covers (80.1, 80.2) are fixed to the relative side wall (36.1, 36.2) by screws, the extent of projection of the annular sealing rib of the lateral covers (80.1, 80.2) being greater along those portions thereof more distant from the holes for the fixing screws.

10. A pneumatic pulsator (10; 10A) as claimed in claim 1, wherein the pneumatic operating device comprises a removable inverter unit (84).

11. A pneumatic pulsator (10; 10A) as claimed in claim 10, wherein means (86, 88) are provided for snap-fitting the inverter unit (84) to the body (12).

12. A pneumatic pulsator (10; 10A) as claimed in claim 1, wherein the exit channels (12, 14) which enable the pulsator (10; 10A) to be connected to the pulsator chambers of a milking unit present in their interior one (90) or more longitudinal baffles which divide their cross-section into two or more equal parts.

13. A pneumatic pulsator (10; 10A) as claimed in claim 1, wherein means (92, 94, 26, 28, 30, 40, 43, 53) are provided for mounting its various component parts in their correct position.

14. A pneumatic pulsator (10; 10A) as claimed in claim 1, wherein the material which forms the body (12) is also of self-lubricating type.
